# EUROPEAN PATENT SPECIFICATION

(11) **EP 1 904 203 B1**
(45) Date of publication and mention of the grant of the patent: **16.08.2017**
(21) Application number: 06753628.4
(22) Date of filing: 15.05.2006
(51) Int. Cl.: A63G 7/00, B60R 21/00, B60R 22/00

(54) **AMUSEMENT DEVICE SEAT ASSEMBLY**
SITZANORDNUNG FÜR VERGNÜGUNGSVORRICHTUNG
ENSEMBLE SIÈGE POUR DISPOSITIF DE DIVERTISSEMENT

(30) Priority: 13.05.2005 EP 05076134
(43) Date of publication of application: 02.04.2008
(73) Proprietor: Vekoma Rides Engineering B.V., 6063 BA Vlodrop (NL)
(72) Inventor: ROODENBURG, Joop, 2612 HA Delft (NL); PHILIPPEN, Johan, Willem, 6451 GC Schinveld (NL)
(74) Representative: EP&C
(86) International application number: PCT/EP2006/004562
(87) International publication number: WO 2006/120029

(56) References cited:
- US-A- 4 186 962
- US-A- 4 770 468
- US-A- 5 779 319
- US-A1- 2003 085 608
- US-B1- 6 431 989

## Description

The invention relates to an amusement device seat assembly, comprising a seat, capable of accommodating a person. The seat comprises a seating surface and a back support with a back support surface. The seat assembly further comprises a pivot axis in the vicinity of the back support and remote from the seating surface, which pivot axis is substantially parallel to the back support and substantially parallel to the seating surface. The amusement device seat assembly further comprises a bar construction comprising a hip bar and one or more pivot arms, which pivot arm extends between the pivot axis and the hip bar, and a belt construction connected to the back support and to the bar construction, comprising at least two shoulder straps. The bar construction is pivotable about the pivot axis from a raised position with the hip bar is raised from the seating surface such that a person can sit down in the amusement device seat assembly, to a lowered position. In the lowered position the hip bar is in the vicinity of the seating surface, so as to extend over the lap of a person seated in the amusement device seat assembly. In the lowered position of the bar construction the shoulder straps extend across the shoulders and the upper part of the body of a person seated in the amusement device seat assembly.

This type of amusement device seat assembly is well known from the art and applied in many amusement devices such as roller coasters, both in fairgrounds and in amusement parks. An example of such an amusement device seat assembly is shown in US 2003/0024428. From US 5,779,319 and US 4,186,962 childs car seats are known, comprising a belt construction and a cushioned or padded arm rest. The belt constructions extend from a back support of the seat and are connectable to a seat belt buckle connected to a seating surface of the seat. The arm rest is part of a bar construction that is connected pivotably to the seat. In US 4,770,468 a child seat having a similar belt construction is disclosed, wherein a tray is provided on a pivotable bar construction, instead of an arm rest. The present invention provides a roller coaster provided with one or more roller coaster seat assemblies adapted to carry one or more passengers according to claim 1. The pivot arm in the lowered position is located behind an imaginary plane that extends tangent and substantially parallel with the back support surface. This allows a person seated in the seat to experience a greater sense of freedom, since no part of the bar construction takes away the view of the person, or limits the movements of the arms of the person. The safety of the person seated in the amusement device seat assembly is secured by the belt construction. The bar construction provides a robust connection for the belt construction, making small loose parts unnecessary. Moreover, it enables the operator to easily secure all persons in the amusement device and also to check whether everyone is secured safely. Preferably the pivot axis extends behind the back support, at a distance above the seating surface. More preferably, the pivot axis extends behind the back support, in an upper part above the middle thereof.

In a preferred embodiment of an amusement device seat assembly according to the invention, the connection of the belt construction with the back support is adjustable, so that the belt construction can be fixed to the back support in multiple positions varying height. This type of amusement device seat assembly will make amusement devices suitable for use by persons of different length, in particular children and adults.

In a preferred embodiment, the back support of the seat is provided with a lumbar support. This will fix the passenger more firmly into the seat and will increase the sense of safety of the passenger.

In a possible embodiment, multiple seats are present in one amusement device seat assembly.

Preferably, the bar construction comprises two pivot arms. Between the pivot arms one or more seats can be provided. The mutual distance between the pivot arms should be such that the pivot arms can easily pass the one or more passengers and the back support when lowering or raising the bar construction.

The invention will be explained in more detail with reference to the drawings, in which:
Figure 1a shows a perspective view of a first embodiment of an amusement device seat assembly according to the invention,
Figure 1b shows a side elevational view of the embodiment according to figure 1a,
Figure 2a shows a perspective view of a second embodiment of an amusement device seat assembly according to the invention, and
Figure 2b shows a side elevational view of the embodiment according to figure 2a,
Figure 3 shows a perspective view, partly in cross-section of a third embodiment of an amusement device seat assembly according to the invention.

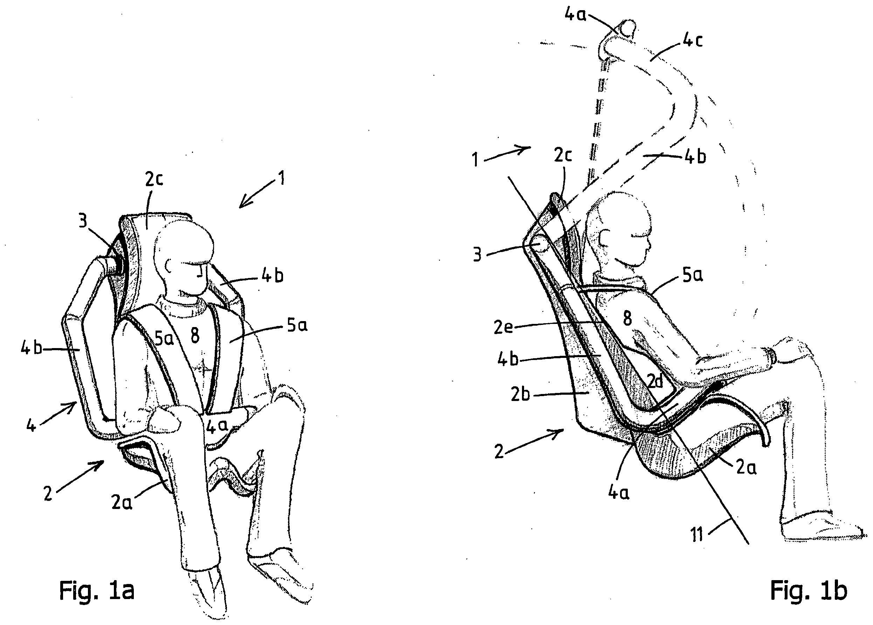

Fig. 1a shows a person 8 sitting in the amusement device seat assembly 1 with a bar construction 4 in a lowered position. Fig. 1b shows a side view of the person 8 sitting in the amusement device seat assembly 1 in a lowered position of the bar construction 4. The bar construction can have a raised position which is illustrated in dashed lines.

The amusement device seat assembly 1 comprises a seat 2, capable of accommodating a person 8. The seat 2 comprises a seating surface 2a and a back support 2b with a back support surface 2e. The back support surface is the surface of the back support 2b against which the back of the person 8 sitting in the amusement device seat assembly 1 rests. The back support 2b may comprise small curvatures to improve the comfort of the person 8. The imaginary plane is defined as a substantially flat tangent plane that extends behind the back of the person, through the back support 2b, and is illustrated in fig. 1b, indicated by reference numeral 11. The seating surface 2a of this embodiment has a shape adapted to the legs of the person such that the legs are well supported and thus positioned comfortably. The seat 2 further comprises a headrest 2c and a lumbar support 2d. In a preferred embodiment, the seat 2 is produced in one piece, for example by mould casting.

A pivot axis 3 extends in the vicinity of the back support 2b, behind the headrest 2c, at a distance above the seating surface. The pivot axis 3 is substantially parallel to the back support 2b and substantially parallel to the seating surface 2a.

The amusement device seat assembly 1 further comprises a bar construction 4. The bar construction 4 comprises a hip bar 4a and two pivot arms 4b. The pivot arms 4b extend between the pivot axis 3 and the hip bar 4a. A belt construction 5 comprising two shoulder straps 5a is connected to the back support 2b and to the hip bar 4a. In a not shown embodiment the straps 5a could also be connected to the pivot arm 4b, similar to the assembly shown in US 2003/0024428. The pivot arms 4b could be of any material, for example aluminium. The hip bar 4a is preferably padded for the comfort of the person in the amusement device seat assembly 1. The shoulder straps are also preferably padded. The hip bar 4a is of a curved construction. It can be made from multiple sections including angles, for example produced by welding but also in one piece by bending. The pivot arm 4b and the hip bar 4a can be produced in one piece together, but also from two connected sections. In the shown embodiment, the pivot arm is constructed in a single plane, as is visible from the side view of fig. 1b. The hip bar 4a extends transversely with respect to this plane, over the seating surface in the lowered position, over the lap of a person 8 seated in the amusement device seat assembly 1. The pivot arm can have also another number of mutually angled sections.

The bar construction 4 is pivotable about the pivot axis 3. In a raised position, shown in dashed lines in fig. 1b, the hip bar 4a is remote from the seating surface 2a and the pivot arms 2b with the belt construction 5 are extending upwards. The amusement device seat assembly is fixed in this raised position, for example in a boarding station of an amusement device, allowing a passenger to enter and sit down onto the seat 2. In a not shown embodiment, the seating surface 2a of the seat 2 is preferably approximately horizontal in the boarding station, and the back support 2b is preferably approximately vertical or at a slight angle increasing the comfort of the passenger. This is the most comfortable way of entering the amusement device seat assembly. In other parts of the amusement device, it is not necessary for the seating surface 2a to be approximately horizontal.

For example, when all passengers have entered the amusement device seat assemblies present in the amusement device, the bar construction 4 can pivot to a lowered position. For this purpose, preferably an automatic raising and lowering mechanism and a fixing mechanism (not shown) is provided for each amusement device seat assembly. For example, a pneumatic raising and lowering mechanism is provided, in combination with a pneumatic fixing mechanism.

In the lowered position, shown in fig. 1a and in 1b in solid lines, the hip bar is in the vicinity of the seating surface, extending over the lap and in front of the hips and the belly of a person 8 seated in the amusement device seat assembly 1. The shoulder straps 5a extend across the shoulders and upper part of the body of a person 8 seated in the amusement device seat assembly 1. In the shown embodiment, the mutual distance between the pivot arms is e.g. approximately 1 metre, suitable for accommodating a seat for one person between the pivot arms 4b. As a result of this mutual distance, the pivot arms 4b can easily pass the passenger 8 and the back support 2b when lowering or raising the bar construction 4. The hip bar 4a extends between the ends of the pivot arms 4b, opposite from the pivot axis 3. The hip bar 4a extends across the lumbar support 2d of the seat 2. This hip bar 4a is, still in the lowered position, located close to the seating surface 2a. When a person 8 is seated in the seat 2, the hip bar 4a extends in the vicinity of the elbow and the forearm of the person 8. According to the invention, the pivot arms 4b are behind the imaginary plane defined by the back support surface 2c. Hence, the pivot arms 4b are located behind the shoulders of the person 8 and therefore, the arms of the person will be free to move. This contrary to the embodiment according to the state of the art, shown in US 2004/0024428, in which the pivot arms extend over the shoulder and upper arm part of the person. It is conceivable to design an embodiment in which in the lowered position not the entire pivot arm is located behind this imaginary plane. What is meant by this invention is that the part of the pivot arm that, in the lowered position of the bar construction, is at the level of the upper body part and the head of the person seated in the seat assembly is located behind this imaginary plane.

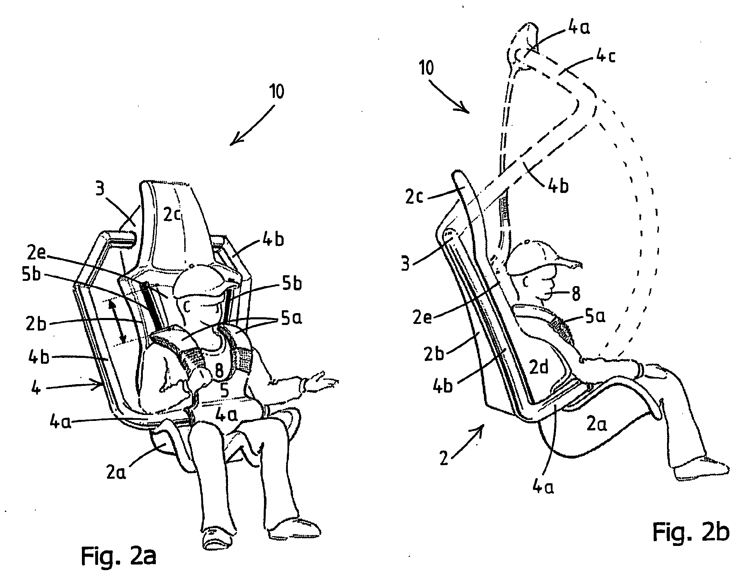

Figs. 2a and 2b show a second embodiment of an amusement device seat assembly 10 according to the invention. Same parts are indicated with same numbers. Fig. 2a indicated a perspective view of the amusement device seat assembly 10. Fig. 2b shows a side view in dashed lines indicated a raised position of the bar construction 4 and in straight lines a lowered position of the bar construction. In the embodiment shown in figs. 2a and 2b, an adjustable connection of the belt construction 5 with the back support 2b is visible, designed as a slidable anchorage 5b. With this adjustable connection 5b the belt construction 5 can be fixed to the back support 2b in multiple positions varying height. This is in particular beneficial when the amusement device seat assembly 10 should be capable of fixing persons with different length, in particular adults and children in the seat 2, such as the person 8 shown in figs. 2a and 2b. The adjustable connection could be a manually operable mechanism, which can be adjusted by an amusement device operator. In an improved embodiment, the adjustable connection could be an electrically operable mechanism, provided with a sensor that determines whether or not the connection should be lowered or not.

In an alternative embodiment, the seating surface accommodating a person has the shape of a saddle, e.g. as a bicycle saddle. This allows to incorporate the seat assembly in amusement devices which provide another sense of experience of the ride, possibly in a standing position as in a stand-up coaster.

It is possible to provide a latch mechanism between the hip bar and the seat or saddle to fix the bar construction.

The belt construction can in a preferred embodiment comprise two shoulder belts, over which a single padded foam body harness is provided. With such a construction, the straps will not irritate the shoulders of the passenger. When adjusting the height of the belt construction at the back support, the padded harness can be compacted for shorter persons, e.g. by including a compressible section, e.g. with predefined folding lines as in figures 2a,b. According to the invention, the belt construction of the seat assembly is also provided with an adjustable length mechanism to allow for adaptation to the passenger. Possibly, the mechanism includes a spring, e.g. a torsion spring, as is used in safety belts in cars. This adjustable length mechanism can be provided in the back support of the seat assembly, but also in the bar construction to which the belt construction is connected.

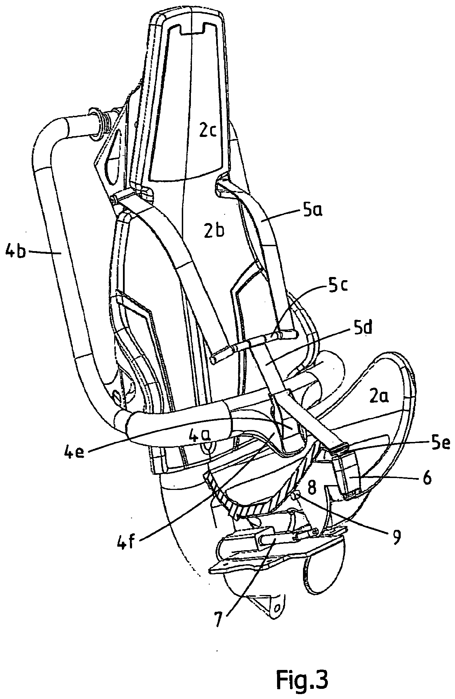

In a further advanced version, as shown in figure 3, the shoulder straps 5a of the belt are anchored to the back support 2b (in this example at a fixed position) and the lower ends of the straps 5a are connected to a connecting member 5c. From said member 5c a lower belt strap 5d extends to and through a guide member 4e on the hip bar. Below said guide member 4e the strap 5d is provided with a locking member 5e.

The seat 2 is provided with a lock 6 to which said locking member 5e can be fixed when the passenger is seated. Thus in this arrangement the belt as it where extends through the hip bar.

In normal use the passenger will be seated on the seat, then the bar construction is lowered (automatically if desired). The passenger has then to grip the locking member 5e, which is then at a central position on the hip bar, and connect it to the lock 6.

As is preferred, and shown in figure 3, the lock 6 to which the lower end of the belt is fastened, is arranged in a mobile manner to allow for the tensioning of the belt. In this example the lock 6 is associated with a (pneumatic) displacement mechanism, preferably arranged below the seat (shown here partly in cross-section). Here the lock displacement mechanism includes a pneumatic cylinder 7. In this example the cylinder causes the pivoting of pivotable member 8 about a horizontal axis 9. The lock 6 is also fastened on said pivotable member 8.

In the drawings it can also be recognised that - as is preferred - the hip bar 4a is centrally provided with a spacer member 4f extending downwards. This member 4f extends in lowered position of the bar construction between the thighs of the passenger which provides enhanced security.

## Claims

1. Roller coaster provided with one or more roller coaster seat assemblies (1) adapted to carry one or more passengers, wherein each seat assembly comprises:
(a) a seat (2), capable of accommodating a passenger, comprising a seating surface (2a),a back support (2b) with a back support surface (2e) and a headrest (2c);
(b) a pivot axis (3) extending behind the headrest (2c) at a distance above the seating surface (2a) which pivot axis (3) is substantially parallel to the back support (2b) and substantially parallel to the seating surface (2a);
(c) a bar construction (4) comprising a hip bar (4a) and one or more pivot arms (4b) formed integral with the hip bar, which bar construction (4) is pivotable about the pivot axis (3) from a raised position in which the hip bar (4a) is raised from the seating surface (2a) to allow a passenger to sit down in the roller coaster seat assembly, to a lowered position, in which
• the hip bar (4a) is in the vicinity of the seating surface (2a), so as to extend over the lap and in front of the hips of a passenger,
(d) a belt construction (5) connected to the back support (2b) and to the bar construction (4) comprising at least two shoulder straps (5a), further being provided with an adjustable length mechanism to allow for adaptation to the passenger in the lowered position of the bar construction such that the shoulder straps extend across the shoulders and upper part of the body of a passenger seated in the roller coaster, **characterized in that** in the lowered position of the bar construction at least part of the pivot arm (4b) which is at the level of the upper body part and the head of the person seated in the seat assembly is located behind an imaginary plane (11) that extends tangent and substantially parallel with the back support surface (2e), such that the pivot arm (4b) can easily pass the passenger (8) and the back support (2b) when lowering or raising the bar construction (4), such that the bar construction does not take away the view of the passenger and does not limit the movements of the arms of the passenger.

2. A roller coaster according to claim 1, in which the shoulder straps (5a) are padded.

3. A roller coaster according to claim 1, wherein over the two shoulder straps (5a) a single padded foam body harness is provided.

4. A roller coaster according to claim 1, wherein the adjustable length mechanism comprises a spring.

5. A roller coaster according to claim 1, wherein the adjustable length mechanism is provided in the bar construction (4) to which the belt construction (5) is connected.

6. A roller coaster according to claim 1, wherein the adjustable length mechanism can be provided in the back support (2b) of the seat assembly (2).

7. A roller coaster according to claim 1, in which the connection (5b) of the belt construction (5) with the back support (2b) is adjustable, so that the belt construction (5) can be fixed to the back support (2b) in multiple positions with varying height.

8. A roller coaster according to claim 7, wherein the adjustable connection (5b) is designed as a slidable anchorage (5b).

9. A roller coaster according to claim 1, in which the back support (2b) of the seat (2) is provided with a lumbar support (2d).

## Patentansprüche

1. Eine Achterbahn, welche eine oder mehrere Achterbahnsitzanordnungen (1) aufweist, die dazu ausgebildet sind, einen oder mehrere Passagiere zu befördern, wobei jede Sitzanordnung die folgenden Elemente umfasst:
(a) einen Sitz (2), welcher dazu ausgebildet ist einen Passagier aufzunehmen, umfassend eine Sitzfläche (2a), eine Rückenstütze (2b) mit einer Rückenstützfläche (2e), und eine Kopfstütze (2c);
(b) eine Schwenkachse (3), welche sich hinter der Kopfstütze (2c) in einem Abstand über der Sitzfläche (2a) erstreckt, wobei die Schwenkachse (3) im Wesentlichen parallel zu der Rückenstütze (2b) und im Wesentlichen parallel zu der Sitzfläche (2a) ist;
(c) eine Stangenkonstruktion (4), umfassend eine Hüftstange (4a) und einen oder mehrere Schwenkarme (4b), welcher bzw. welche einstückig mit der Hüftstange ausgebildet ist bzw. sind, wobei die Stangenkonstruktion (4) aus einer angehobenen Position, in welcher die Hüftstange (4a) von der Sitzfläche (2a) angehoben ist, damit sich ein Passagier in die Achterbahnsitzanordnung setzen kann, um die Schwenkachse (3) in eine abgesenkte Position schwenken lässt, in welcher
- die Hüftstange (4a) sich in der Nähe der Sitzfläche (2a) befindet, so dass sie sich über den Schoß und vor den Hüften eines Passagiers erstreckt,
(d) eine Gurtkonstruktion (5), welche mit der Rückenstütze (2b) und mit der Stangenkonstruktion (4) verbunden ist, umfassend mindestens zwei Schulterriemen (5a), und welche weiter einen einstellbaren Längenmechanismus zum Anpassen an den Passagier in der gesenkten Position der Stangenkonstruktion aufweist, so dass die Schulterriemen sich über die Schultern und den oberen Teil des Körpers eines Passagiers, welcher in der Achterbahn sitzt, erstrecken,
**dadurch gekennzeichnet, dass** in der gesenkten Position der Stangenkonstruktion zumindest ein Teil des Schwenkarms (4b), welcher auf dem Niveau des oberen Körperteils und des Kopfes der Person ist, welche in der Sitzanordnung sitzt, sich hinter einer imaginären Ebene (11) befindet, welche sich tangential und im Wesentlichen parallel zu der Rückenstützenfläche (2e) erstreckt, sodass der Schwenkarm (4b) auf einfache Weise den Passagier (8) und die Rückenstütze (2b) passieren kann, wenn die Stangenkonstruktion (4) gesenkt oder gehoben wird, so dass die Stangenkonstruktion dem Passagier nicht die Sicht nimmt und Bewegungen der Arme des Passagiers nicht einschränkt.

2. Eine Achterbahn nach Anspruch 1, in welcher die Schulterriemen (5a) gepolstert sind.

3. Eine Achterbahn nach Anspruch 1, wobei über den zwei Schulterriemen (5a) ein einzelner gepolsterter Schaumstoffkörpergurt angebracht ist.

4. Eine Achterbahn nach Anspruch 1, wobei der einstellbare Längenmechanismus eine Feder umfasst.

5. Eine Achterbahn nach Anspruch 1, wobei der einstellbare Längenmechanismus in der Stangenkonstruktion (4) bereitgestellt ist, mit welcher die Gurtkonstruktion (5) verbunden ist.

6. Eine Achterbahn nach Anspruch 1, wobei der einstellbare Längenmechanismus in der Rückenstütze (2b) der Sitzanordnung (2) bereitgestellt sein kann.

7. Eine Achterbahn nach Anspruch 1, in welcher die Verbindung (5b) der Gurtkonstruktion (5) mit der Rückenstütze (2b) derart einstellbar ist, dass die Gurtkonstruktion (5) in mehreren Positionen mit variierender Höhe an der Rückenstütze (2b) befestigt werden kann.

8. Eine Achterbahn nach Anspruch 7, wobei die einstellbare Verbindung (5b) als verschiebbare Verankerung (5b) ausgeführt ist.

9. Eine Achterbahn nach Anspruch 1, in welcher die Rückenstütze (2b) des Sitzes (2) eine Lendenstütze (2d) aufweist.

## Revendications

1. Montagnes russes prévues avec un ou plusieurs ensembles de siège (1) de montagnes russes adaptés pour transporter un ou plusieurs passagers, dans lequel chaque ensemble de siège comprend :
(a) un siège (2) capable d'accueillir un passager, comprenant une surface d'assise (2a), un support de dos (2b) avec une surface de support de dos (2e) et un appuie-tête (2c) ;
(b) un axe de pivot (3) s'étendant derrière l'appuie-tête (2c) à une distance au-dessus de la surface d'assise (2a), lequel axe de pivot (3) est sensiblement parallèle au support de dos (2b) et sensiblement parallèle à la surface d'assise (2a) ;
(c) une construction de barre (4) comprenant une barre de hanches (4a) et un ou plusieurs bras de pivot (4b) formés de manière solidaire avec la barre de hanches, laquelle construction de barre (4) peut pivoter autour de l'axe de pivot (3) à partir d'une position levée dans laquelle la barre de hanches (4a) est levée par rapport à la surface d'assise (2a) pour permettre à un passager de s'assoir dans l'ensemble de siège de montagnes russes, à une position abaissée, dans laquelle :
la barre de hanches (4a) est à proximité de la surface d'assise (2a), afin de s'étendre sur les genoux et en face des hanches d'un passager,
(d) une construction de ceinture (5) raccordée au support de dos (2b) et à la construction de barre (4) comprenant au moins deux sangles d'épaule (5a), étant en outre prévue avec un mécanisme à longueur ajustable pour permettre de s'adapter au passager dans la position abaissée de la construction de barre de sorte que les sangles d'épaule s'étendent sur les épaules et la partie supérieure du corps d'un passager assis dans les montagnes russes,
**caractérisées en ce que**, dans la position abaissée de la construction de barre, au moins une partie du bras de pivot (4b) qui est au niveau de la partie supérieure du corps et de la tête d'une personne assise dans l'ensemble de siège, est positionnée derrière un plan imaginaire (11) qui s'étend de manière tangentielle et sensiblement parallèle à la surface de support de dos (2e), de sorte que le bras de pivot (4b) peut facilement passer sur le passager (8) et le support de dos (2b) lors de l'abaissement ou du levage de la construction de barre (4), de sorte que la construction de barre ne diminue pas la vue du passager et ne limite pas les mouvements des bras du passager.

2. Montagnes russes selon la revendication 1, dans lesquelles les sangles d'épaule (5a) sont rembourrées.

3. Montagnes russes selon la revendication 1, dans lesquelles, sur les deux sangles d'épaule (5a), on prévoit un seul harnais corporel rembourré en mousse.

4. Montagnes russes selon la revendication 1, dans lesquelles le mécanisme à longueur ajustable comprend un ressort.

5. Montagnes russes selon la revendication 1, dans lesquelles le mécanisme à longueur ajustable est prévu dans la construction de barre (4) à laquelle la construction de ceinture (5) est raccordée.

6. Montagnes russes selon la revendication 1, dans lesquelles le mécanisme à longueur ajustable peut être prévu dans le support de dos (2b) de l'ensemble de siège (2).

7. Montagnes russes selon la revendication 1, dans lesquelles le raccordement (5b) de la construction de ceinture (5) avec le support de dos (2b) est ajustable, de sorte que la construction de ceinture (5) peut être fixée sur le support de dos (2b) dans une multitude de positions avec une hauteur variable.

8. Montagnes russes selon la revendication 7, dans lesquelles le raccordement ajustable (5b) est conçu comme un ancrage coulissant (5b).

9. Montagnes russes selon la revendication 1, dans lesquelles le support de dos (2b) du siège (2) est prévu avec un support lombaire (2d).
